# EUROPEAN PATENT APPLICATION

(11) **EP 4 718 799 A1**
(43) Date of publication of application: **01.04.2026**
(21) Application number: 25186397.3
(22) Date of filing: 30.06.2025
(51) Int. Cl.: H04L 41/0631, H04L 41/0654, H04L 41/5067, H04L 41/5009, H04L 41/50, H04L 43/08

(54) **PERFORMANCE MONITORING OF AN APPLICATION SESSION BASED ON COPARTICIPANTS**

(30) Priority: 27.09.2024 US 202418899625
(71) Applicant: Juniper Networks, Inc., Sunnyvale, CA 94089 (US)
(72) Inventor: VARMARKEN, Janus, Sunnyvale, 94089 (US); SWAMY, Kumar Putta, Sunnyvale, 94089 (US); KUMAR, Prashant, Sunnyvale, 94089 (US); KONDA, Supreeth Subhas, Sunnyvale, 94089 (US)
(74) Representative: D Young & Co LLP

(57) **Abstract**

Techniques are described for a network management system (NMS) configured to determine a root cause of an issue in performance of an application session, and perform one or more actions to remedy the issue. For example, the NMS is configured to obtain application performance data of an application session including a plurality of users; determine, based on the application performance data, a contributing user that contributed to an issue in performance of the application session; obtain network data or non-network data of one or more devices of a network associated with the contributing user; determine, based on the network data or non-network data of the one or more devices of the network associated with the contributing user, a root cause of the issue in performance of the application session; and perform an action to remedy the root cause of the issue in performance of the application session.

## Description

This application claims the benefit of US Patent Application No. 18/899,625, filed 27 September 2024, the entire contents of which is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "Wi-Fi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

In the case of a client device running a cloud-based application, such as a voice over Internet Protocol (VoIP) application, gaming application, or video conference application, data is exchanged during a session for the application (referred to as an "application session") between the client device and the cloud-based application server through one or more APs and one or more wired network devices, e.g., switches, routers, and/or gateway devices. Applications such as conferencing and/or collaboration-based applications (e.g., video conferencing application) enable a plurality of users to collectively participate during an application session over a network. The performance of an application session for these types of applications may depend on the network and/or non-network performance of a particular user among coparticipants of the application session. For example, the network and/or non-network performance of devices associated with a network including a particular user (e.g., a user speaking, sharing video and/or content, etc.) may affect the performance of the application session for the other coparticipants of the application session (e.g., a user listening, receiving video and/or content shared by the sender, etc.).

### SUMMARY

Particular aspects are set out in the appended independent claims. Various optional embodiments are set out in the dependent claims.

**In** general, this disclosure describes one or more techniques for determining a root cause of an issue in performance of an application session including a plurality of users, and performing one or more actions to remedy the issue. For example, conferencing and/or collaboration-based applications (referred to herein as "conferencing applications") may enable a plurality of users to collectively participate in an application session. Users participating in the application session may include a sender that sends data (e.g., audio data, video data, screen share data, and/or other data) to one or more receivers that receive the data from the sender. During the application session, client devices of the users may communicate with a cloud-based application server that hosts the application through one or more network devices (e.g., access point (AP) devices, switches, network nodes, etc.) of one or more networks (e.g., wired network, wireless network, wide area network, etc.). In some instances, a user participating in the application session may experience an issue in the performance of the application session based on an issue caused by a network and/or device of a network associated with another user of the application session. In accordance with the disclosed techniques, a computing system, such as a network management system (NMS), may determine a root cause of an issue in performance of the application session based on data associated with the users participating in the application session, and/or may perform an action to remedy the issue in performance of the application session.

As one example, the NMS may obtain data indicative of the performance of the application session from an application server (e.g., from an application service provider of the application of the application session). The data indicative of the performance of the application session may be based on modality, such as data indicative of the performance of audio (e.g., latency, jitter, packet loss, audio bitrate), video (e.g., latency, jitter, packet loss, video frame rate, video resolution, etc.), and/or screen share (e.g., latency, jitter, packet loss, video frame rate, video resolution, etc.) of the application session (collectively referred to herein as "application performance data") that are observed and/or collected by the application server. Based on the application performance data, the NMS may determine a contributing user among the users participating in the application session that caused the issue in performance of the application session, such as a sender and/or receiver of the application session.

In some examples, the NMS may additionally obtain data indicative of the performance of a network and/or devices of the network associated with the contributing user to determine the root cause of the issue in performance of the application session with more granularity. For example, the NMS may obtain data indicative of the performance and/or state of a network (e.g., wireless network, wired network, wide area network) associated with the contributing user, such as service level expectation (SLE) related data, event data, telemetry data, etc. (collectively referred to herein as "network data") that are observed and/or collected by devices of the network associated with the contributing user. The SLE metrics may additionally, or alternatively, include data indicative of the performance of a device, such as CPU usage, memory usage, battery usage, quality of audio devices communicatively coupled to the device, and/or other data indicative of the performance of a component or resource of the device (collectively referred to herein as "device data" or "non-network data").

Based on the network and/or non-network data of devices of the network associated with the contributing user, the NMS may determine a root cause of an issue in performance of the application session, such as determining that the issue is caused by a particular network service or function (e.g., wireless, wired, WAN services or functions) provided by a device in the network associated with the contributing user, and/or a component of the device (e.g., CPU, battery, etc.) in the network associated with the contributing user.

The disclosed techniques may provide one or more technical advantages and practical applications. For example, by obtaining application session data of the application session, and/or network and/or non-network data of devices associated with the application session, the NMS may determine the underlying cause of a degradation in performance of the application session.

In one example, the disclosed techniques describe a network management system comprising memory and one or more processors coupled to the memory and configured to perform one or more techniques described in this disclosure. For example, the one or more processors are configured to obtain, from an application server, application performance data of an application session including a plurality of users; determine, based on the application performance data, a contributing user of the plurality of users that contributed to an issue in performance of the application session; obtain network data or non-network data of one or more devices associated with a network including the contributing user; determine, based on the network data or the non-network data of the one or more devices associated with the network including the contributing user, a root cause of the issue in performance of the application session; and perform an action to remedy the root cause of the issue in performance of the application session.

**In** another example, the disclosed techniques describe a method comprising obtaining, from an application server, application performance data of an application session including a plurality of users; determining, based on the application performance data, a contributing user of the plurality of users that contributed to an issue in performance of the application session; obtaining network data or non-network data of one or more devices associated with a network including the contributing user; determining, based on the network data or the non-network data of the one or more devices associated with the network including the contributing user, a root cause of the issue in performance of the application session; and performing an action to remedy the root cause of the issue in performance of the application session.

**In** one example, the disclosed techniques describe computer-readable media comprising (e.g. storing and/or conveying) instructions that, when executed by processing circuitry, cause the processing circuitry to perform one or more techniques of the disclosure. For example, the instructions cause the processing circuitry to obtain application performance data of an application session including a plurality of users; determine, based on the application performance data, a contributing user of the plurality of users that contributed to an issue in performance of the application session; obtain network data or non-network data of one or more devices associated with a network including the contributing user; determine, based on the network data or non-network data of the one or more devices associated with the network including the contributing user, a root cause of the issue in performance of the application session; and perform an action to remedy the root cause of the issue in performance of the application session.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system in which a network management system determines a root cause of an issue in performance of an application session including a plurality of users, and performs one or more actions to remedy the issue, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system configured to determine a root cause of an issue in performance of an application session including a plurality of users, and perform one or more actions to remedy the issue, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 is a flowchart illustrating an example operation of determining a root cause of an issue in performance of an application session including a plurality of users, in accordance with one or more techniques of the disclosure.
FIGS. 7A and 7B illustrate example user interfaces including user interface elements representing data indicative of a root cause of an issue in performance of an application session, in accordance with one or more techniques of the disclosure.

### DETAILED DESCRIPTION

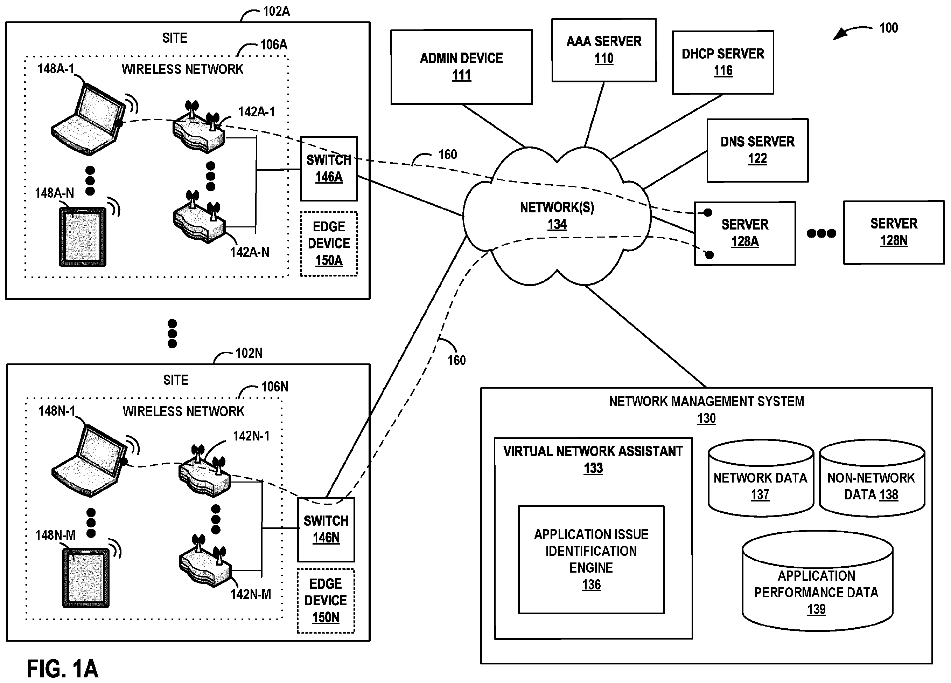

FIG. 1A is a block diagram of an example network system 100 in which a network management system (NMS) 130 determines a root cause of an issue in performance of an application session including a plurality of users, and performs one or more actions to remedy the issue, in accordance with one or more techniques of this disclosure. Example network system 100 includes a plurality of sites 102A-102N at which a network service provider manages one or more wireless networks 106A-106N, respectively. Although each of sites 102A-102N is shown in FIG. 1A as including a single wireless network 106A-106N, respectively, in some examples, each of sites 102A-102N may include multiple wireless networks, and the disclosure is not limited in this respect.

Each of sites 102A-102N includes a plurality of network access server (NAS) devices, such as access points (APs) 142, switches 146, or routers (not shown) within the wired network edge. For example, site 102A includes a plurality of APs 142A-1 through 142A-N. Similarly, site 102N includes a plurality of APs 142N-1 through 142N-M. Each AP 142 may be any type of wireless access point, including, but not limited to, a commercial or enterprise AP, a router, or any other device that is connected to the wired network and is capable of providing wireless network access to client devices within the site. References to "N" or "M" may represent any number. References to "N" for different elements need not be the same number. Similarly, references to "M" for different elements need not be the same number.

Each of sites 102A-102N also includes a plurality of client devices, otherwise known as user equipment devices (UEs), referred to generally as UEs or client devices 148, representing various wireless-enabled devices within each site. For example, a plurality of UEs 148A-1 through 148A-N are currently located at site 102A. Similarly, a plurality of UEs 148N-1 through 148N-M are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-N at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128N (collectively "servers 128") (e.g., web servers, databases servers, file servers, application servers, and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / short messaging service (SMS) messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The admin device 111 may comprise a computing device of IT personnel and/or administrator associated with one or more of sites 102 and/or switches 146 at the wired network edge. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to corresponding edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137 received from wireless networks 106A-106N at each site 102A-102N, respectively, and manages network resources, such as APs 142 at each site, to deliver a high-quality wireless experience to end users, IoT devices, and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wired or wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. As further described below, VNA 133 may also predict issues of an application session, in accordance with one or more techniques of the disclosure. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause or contributor of error conditions detected or predicted from the streams of network data 137. If the root cause or contributor may be automatically resolved, VNA 133 may invoke one or more corrective actions to correct the root cause or contributor of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In accordance with one specific implementation, a computing device or system is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

One or more of servers 128 may include application servers that provide cloud-based applications. The cloud-based applications may include, for example, video conferencing applications, gaming applications, or other conferencing and/or collaboration-based applications. UEs 148 may establish application sessions with application servers via network devices of network system 100 (e.g., APs 142, switches 146, etc.). For example, in a client-to-cloud application session, e.g., application session 160, UEs 148A-1 and 148N-1 may each interface with corresponding wireless networks, wireless networks 106A and 106N, respectively, which in turn may each be in communication with a corresponding wired network that is in communication with a WAN that may interface with a service provider network provided by an Internet service provider (ISP), such as network 134, to connect to an application server, e.g., server 128A, which hosts an application accessible by the plurality of client devices. For a given instance of application session 160, a user of application session 160 may be a sender or receiver of data. For example, a sender of application 160 may include a user that is speaking, sharing video and/or other content, etc., during application session 160. A receiver may include another user that is listening to the user that is speaking, receiving the video and/or other content shared by the sender, etc., during application session 160. In this example, client device 148A-1 of a sender may, in a given instance of application session 160, send data (e.g., audio data, video data, and/or screen share data) to application server 128A, and client device 148N-1 of a receiver may receive the data from client device 148A-1 via application server 128A. In this example, client device 148A-1 may represent, in the given instance of application session 160, a sender device configured to send data of the sender and client device 148N-1 may represent, in the given instance of application session 160, a receiver device configured to receive data from the sender.

Users participating in application session 160 may experience issues in the performance of application session 160. In some examples, an issue with the performance of a network and/or device associated with a particular user participating in application session 160 may affect the performance of application session 160 for the other users participating in application session 160. For example, at a given instance of application session 160, a network associated with a sender (e.g., wireless network 106A) or a device in the network associated with the sender (e.g., client device 148A-1, AP 142A-1, switch 146A, etc.) may experience an issue (e.g., degradation) in performance and thus cause issues in sending data (e.g., audio data, video data, and/or screen share data) to application server 128A. The issues of the network or device associated with the sender may cause a degradation in performance of application session 160 experienced by receivers of application session 160.

Conventional systems may typically collect data of an application session from an application service provider but do not identify a root cause of an issue in performance of the application session, such as determining a direction of the problem (e.g., determining whether the issue was caused by a sender or receiver), and/or the underlying cause of the issue of the application session, such as identifying a particular service or function provided by a device, or a component of the device, that is causing the degradation in performance of the application session. Instead, conventional systems may rely on manual techniques to remedy the issue in performance of the application session, which may lead to extended periods of downtime and/or service disruption.

In accordance with one or more techniques of this disclosure, NMS 130 includes an application issue identification engine 136 configured to determine a root cause of an issue in performance of an application session including a plurality of users. For example, NMS 130 may obtain application performance data of application session 160 from an application server (e.g., from an application service provider of the application hosted on application server 128A), and/or network and/or non-network data from one or more devices (e.g., clients, APs, switches, gateways) associated with application session 160, to identify and/or remedy issues in the performance of application session 160.

In the example illustrated in FIG. 1A, NMS 130 observes, collects and/or receives application performance data 139. Application performance data 139 may include data indicative of the performance of application session 160 based on modality, such as audio data, video data, and/or screen share data of application session 160. For example, NMS 130 may obtain data indicative of the audio performance of each of the users participating in application session 160, such as audio bitrate, codec, and/or other application parameters indicative of the audio performance of a sender and/or receiver of application session 160. NMS 130 may additionally, or alternatively, obtain data indicative of the video performance of each of the users participating in application session 160, such as video frame rate, video resolution, and/or other application parameters indicative of the video performance of a sender and/or receiver of application session 160. NMS 130 may additionally, or alternatively, obtain data indicative of screen share performance of users participating in application session 160, such as video frame rate, video resolution, and/or other application parameters indicative of the screen share performance of a sender and/or receiver of application session 160.

Application issue identification engine 136 of NMS 130 may determine, based on the application performance data 139 of application session 160, a user experience application score that provides a qualitative measurement of user experience for a user of application session 160. For example, application issue identification engine 136 may input the application performance data of application session 160 to a machine learning model (e.g., random forest-based model), which outputs a user experience application score of a sender and/or receiver for application session 160. The user experience application score for the sender is referred to herein as "user experience application score-out" or "sender application score," and the user experience application score for the receiver is referred to herein as "user experience application score-in" or "receiver application score."

As further described below, application issue identification engine 136 may determine, based on the user experience application score of a particular user (e.g., receiver) at a given instance (e.g., particular time or window of time) of application session 160, whether the user is experiencing a "bad" or "poor" user experience for the given instance of application session 160. For example, application issue identification engine 136 may compare the user experience application score for a user (e.g., receiver) to a threshold indicative of a "bad" or "poor" user experience. If the user experience application score for the user satisfies the threshold, and thus determines that the user is experiencing a "bad" or "poor" user experience, application issue identification engine 136 may identify another user (e.g., sender) participating in application session 160 that is contributing to the "bad" or "poor" user experience that is experienced by the user, referred to herein as "contributing user." For example, application issue identification engine 136 may determine, based on a user experience application score of a receiver (user of client device 148N-1) for application session 160 at a given instance of application session 160, that the receiver is experiencing a "bad" or "poor" user experience. In response, application issue identification engine 136 may determine, based on the application performance data 139, a contributing user (user of client device 148A-1) for the given instance of application session 160 that is contributing to the issue in performance of application session 160, such as a user that is sending audio data, video data, and/or screen share data at the given instance of application session 160. By determining the contributing user of the issue in performance of application session 160, application issue identification engine 136 may determine, for example, a direction of the problem (e.g., determining that the issue was caused by the sender).

In some examples, NMS 130 may obtain network data 137 and non-network data 138 of devices of a network associated with the contributing user, such as access points, switches, user equipment, and/or other devices in a wired, wireless, and/or SD-WAN network providing the contributing user with access to application session 160, and determine, based on the network and/or non-network data of devices of the network associated with the contributing user, a root cause of the issue in performance of application session 160 with more granularity. For example, NMS 130 observes, collects, and/or receives network data 137 of devices in a network associated with the contributing user, which may take the form of data extracted from messages, counters, and statistics, for example. Network data 137 may include a plurality of states or parameters indicative of one or more aspects of wireless or wired network performance provided by the devices in a network associated with the contributing user. For example, network data 137 may include service level expectation (SLE) metrics or data used to compute SLE metrics (e.g., signal strength (e.g., received signal strength indicators (RSSI)), number of bytes transmitted or received, association status, authorization status, connectivity status, etc.) indicative of the performance of a wireless network (e.g., wireless capacity, wireless coverage, roaming, etc.), the performance of a wired network (e.g., switch bandwidth, etc.), the performance of a wide area network (e.g., latency, jitter, packet loss, application disconnection, slow application, application bandwidth, etc.), the performance of a client device communicatively coupled to a network device (e.g., CPU usage, memory usage, battery usage, sub-optimal IP conduit span, etc.), the performance of a partner link (e.g., performance of a coparticipant of an application session, etc.), and/or other aspects of network performance associated with the contributing user.

In some examples, NMS 130 observes, collects, and/or receives non-network data 138. Non-network data may include a plurality of states or parameters indicative of one or more aspects of device performance. For example, non-network data 138 may include SLE metrics or data to compute SLE metrics indicative of resource utilization (e.g., CPU utilization, memory utilization), quality of audio devices used (e.g., quality of headphones, microphone, speakers, etc.) or other aspects of device performance of devices of the network associated with the contributing user.

Based on the network data 137 and/or non-network data 138 of devices of the network associated with the contributing user, application issue identification engine 136 of NMS 130 may determine, for example, a network service or function provided by a device of the network associated with the contributing user, or a component of the device, that is causing the issue in performance of application session 160. As one example, the contributing user (e.g., user of UE 148A-1) may connect to an access point (e.g., AP 142A-1) configured to provide the user with access to application session 160. AP 142A-1 may detect a weak signal at the given instance the receiver of application session 160 had experienced a degradation in performance with application session 160 and may send data indicative of the weak signal event to NMS 130. Application issue identification engine 136 of NMS 130 may determine, based on the weak signal event detected by AP 142A-1, that the root cause of the degradation in performance of application session 160 is caused by the weak signal of AP 142A-1.

NMS 130 may perform an action to remedy the detected issue, such as generating a notification specifying the root cause of the degradation in performance of application session 160 or automatically performing a remedial action to devices associated with application session 160 (e.g., resetting one or more network devices, changing the configuration of one or more network devices, etc.).

In some examples in which network devices associated with application session 160 are provided by third-parties (and data cannot be obtained from the network devices), NMS 130 may output a notification including an address (e.g., IP address) of the sender device contributing (or whose network associated with the sender device is contributing) to the degradation in performance of application session 160 and/or an indication of the service provider of the sender.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

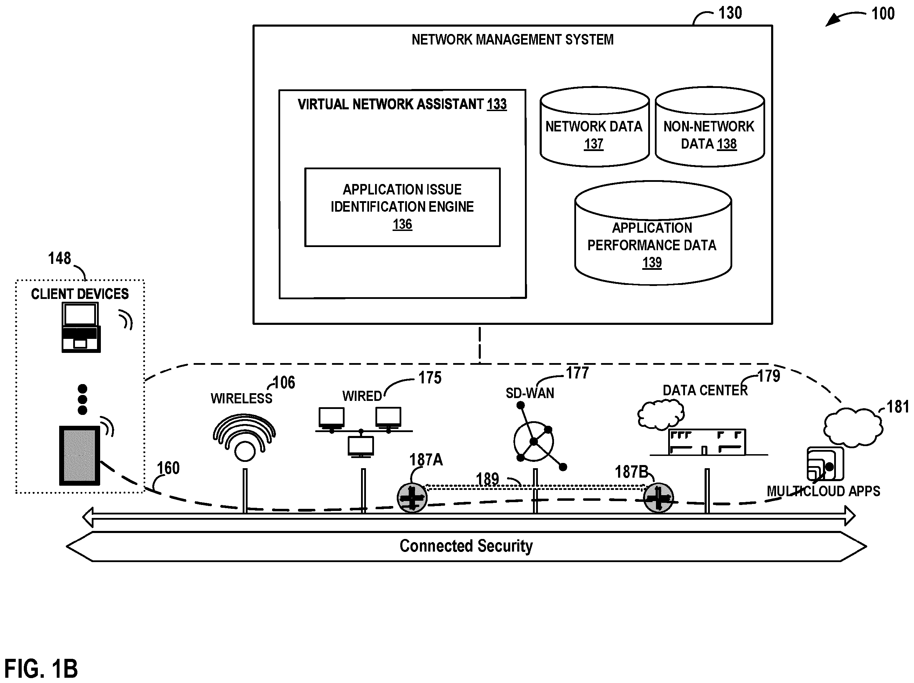

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (Wi-Fi Assurance, Wired Assurance and WAN assurance) spanning from "client," e.g., user devices 148 connected to wireless network 106 and wired LAN 175 at the network edge (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of a wide area network, e.g., software defined wide-area network (SD-WAN) 177, which operates as an intermediate network communicatively coupling wireless networks 106 and wired LANs 175 to data centers 179 and application services (e.g., multi-cloud apps) 181. In general, SD-WAN 177 provides seamless, secure, traffic-engineered connectivity between "spoke" routers 187A of edge wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent 10,756,983, entitled "Intent-based Analytics," and U.S. Patent 10,992,543, entitled "Automatically generating an intent-based network model of an existing computer network," each of which is hereby incorporated by reference.

In accordance with the techniques described in this disclosure, application issue identification engine 136 of VNA 133 is configured to determine a root cause of an issue in performance of an application session including a plurality of users, and perform an action to remedy the issue. In the example illustrated in FIG. 1B, cloud-based application services 181 may include a conferencing and/or collaboration-based application for a plurality of users. Client devices 148 of the plurality of users may establish application session 160 via network devices of a network system (e.g., devices of wireless network 106, devices of wired network 175, devices of SD-WAN 177, etc.) to access the conferencing and/or collaboration-based application of cloud-based application services 181.

NMS 130 may obtain application performance data of an application server of the conferencing and/or collaboration-based application, such as audio data, video data, and/or screen share data of application session 160. For example, NMS 130 may obtain application performance data of application session 160 from an application server of data center 179 hosting the conferencing and/or collaboration-based application or from another device storing the application performance data.

As further described below, application issue identification engine 136 of NMS 130 may determine, based on the application performance data 139 of application session 160, a user experience application score that provides a qualitative measurement of user experience for a user (e.g., sender or receiver) of application session 160. Based on the user experience application score of a user, application issue identification engine 136 may determine whether the user is experiencing a "bad" or "poor" user experience for a given instance (e.g., particular time or window of time) of application session 160. For example, if the user experience application score for the user satisfies the threshold, application issue identification engine 136 of NMS 130 may determine that the user is experiencing a "bad" or "poor" user experience for the given instance of application session 160. Application issue identification engine 136 of NMS 130 may determine, based on the application performance data, a "contributing user" that contributed to the issue in performance of application session 160.

In some examples, NMS 130 may obtain network data 137 and non-network data 138 of devices associated with the contributing sender, such as a client device 148 associated with the contributing sender, one or more network devices of wireless network 106 (e.g., access points) that enable client device 148 to wirelessly connect to wired network 175 via one or more network devices of wired network 175 (e.g., switches), one or more network devices of SD-WAN 177 (e.g., routers 187), and/or any other device in wireless network 106, wired network 175, and/or SD-WAN 177 that provides client device 148 with access to the application server of data center 179 hosting the conferencing and/or collaboration-based application of application session 160. In this example, NMS 130 may obtain network data 137 of one or more network devices (e.g., APs 142 of FIG. 1A) of wireless network 106, such as network data indicative of the performance of wireless network 106 (e.g., wireless coverage, wireless capacity, roaming, etc.). In some examples, NMS 130 may additionally, or alternatively, obtain network data 137 associated with one or more devices (e.g., switches 146 of FIG. 1A) of wired network 175, such as network data indicative of the performance of wired network 175 (e.g., switch bandwidth, etc.). In some examples, NMS 130 may additionally, or alternatively, obtain network data 137 associated with one or more devices of SD-WAN 177 (e.g., routers 187), such as network data indicative of the performance of SD-WAN 177 (e.g., latency, jitter, packet loss, application disconnection, slow application, application bandwidth, etc.). In some examples, NMS 130 may additionally, or alternatively, obtain non-network data 138 associated with a client device 148 associated with the contributing user, such as CPU usage, memory usage, battery usage, sub-optimal IP conduit span, or other information indicative of the performance of the client device associated with the contributing user.

Application issue identification engine 136 of NMS 130 may determine, based on the network and/or non-network data of devices of a network associated with the contributing user, a root cause of the issue in performance of application session 160 with more granularity. For example, application issue identification engine 136 may determine, based on the SLE metrics of one or more devices of the network associated with the contributing user, that a particular service or function (e.g., wireless, wired, WAN services or functions) provided by a device of the network associated with the contributing user, or a component of the device (e.g., CPU, memory, battery, etc.), is the root cause of the degradation in performance of application session 160.

In this way, VNA 133 provides wireless and/or WAN assurance for application sessions between the client devices 148 connected to wireless network 106 and wired LAN 175 and the cloud-based application services 181 that may be hosted by computing resources within data centers 179.

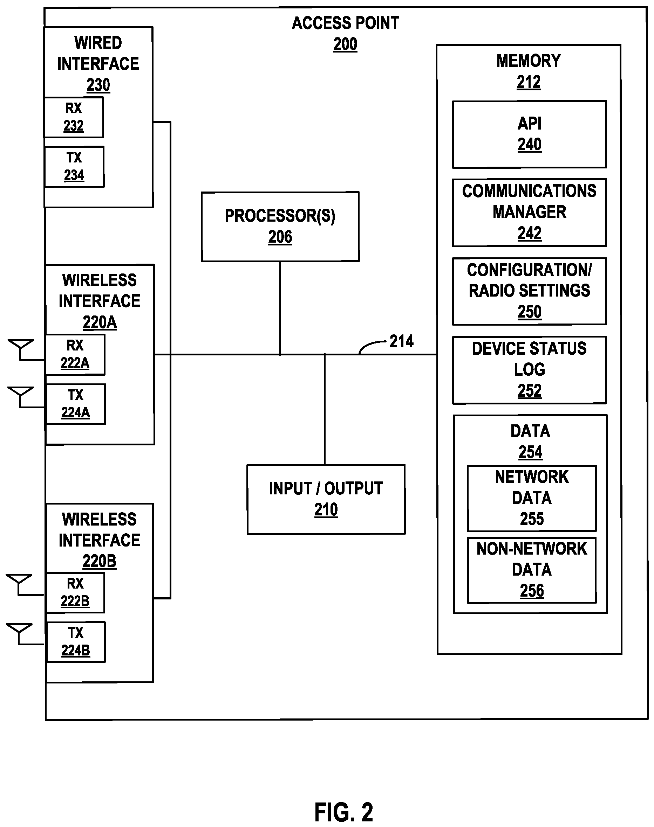

FIG. 2 is a block diagram of an example access point (AP) device 200 configured in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, received from a computer-readable medium. Such instructions may be stored to a computer-readable storage medium (such as memory 212), such as non-transitory computer-readable media including a storage device (e.g., a disk drive, or an optical drive) or a memory (such as Flash memory or RAM) or any other type of volatile or non-volatile memory, that stores instructions to cause the one or more processors 206 to perform the techniques described herein. Such instructions may also or alternatively be received via a computer-readable transmission medium (such as via wired interface 230 and/or wireless interface 220A or 220B) that conveys instructions to cause the one or more processors 206 to perform the techniques described herein.

Memory 212 includes one or more devices configured to store programming modules and/or data associated with operation of access point 200. For example, memory 212 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration/radio settings 250, a device status log 252 and data 254. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report data from status log 252 to NMS 130. Data 254 may comprise event data, telemetry data, and/or other SLE-related data associated with an application session (e.g., application session 160 of FIG. 1A). In some examples, data 254 may store network data 255 and non-network data 256 observed and/or collected by access point 200. Network data 255 may include data indicative of the performance and/or status of a network including AP device 200. For example, network data 255 may include SLE metrics or data used to compute SLE metrics indicative of wireless network performance, such as capacity (bandwidth) of communication channels of AP device 200 available to clients ("wireless capacity") that may be indicative of network issues caused by Wi-Fi interference, non-Wi-Fi interference, client device count, client device usage, etc.; coverage by AP device 200 for one or more client devices ("wireless coverage") that may be indicative of network issues caused by a asymmetric uplink, a asymmetric downlink, a weak signal, etc.; wireless roaming performance that may be indicative of network issues caused by slow roaming, roaming failure, sub-optimal roam, sticky client, etc. Network data 255 may additionally, or alternatively, include SLE metrics or data used to compute SLE metrics indicative of wired network performance that may be indicative of network issues caused by switch bandwidth, for example. Network data 255 may additionally, or alternatively, include SLE metrics or data used to compute SLE metrics indicative of client device performance that may be indicative of network issues caused by CPU usage, memory usage, battery usage, sub-optimal IP conduit span, etc. of a client device. Network data 255 may additionally, or alternatively, include SLE metrics or data used to compute SLE metrics indicative of partner link performance that may be indicative of network issues caused by a coparticipant of an application session. The examples of network data 255 described above are merely an example and may include other data indicative of the performance of a network, such as time to connect, throughput, health of AP device 200, or the like.

Non-network data 256 may include data indicative of the performance and/or status of AP device 200. For example, non-network data 256 may include SLE metrics or data used to compute SLE metrics indicative of resource utilization (e.g., CPU utilization, memory utilization, battery utilization), quality of audio devices used (e.g., quality of headphones, microphone, speakers, etc.), and/or other aspects of the performance of AP device 200. AP device 200 may store data 254 and provide data 254 to NMS 130 to determine, based on data 254, a root cause of an issue in performance of an application session, such as determining a direction of the problem (e.g., determining whether the issue was caused by a sender or receiver), determining a particular service or function provided by AP device 200, and/or a component of AP device 200 that is causing the issue in performance of the application session.

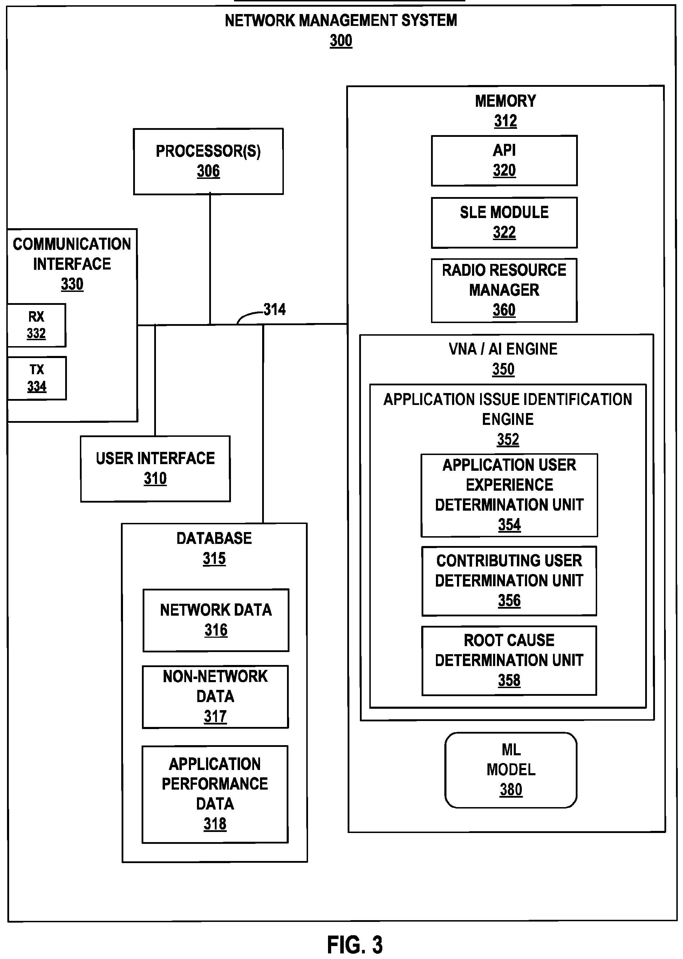

FIG. 3 is a block diagram of an example network management system (NMS) 300 configured to determine a root cause of an issue in performance of an application session including a plurality of users, and perform an action to remedy the issue, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics. NMS 300 analyzes this data for cloud-based management of wireless networks 106A-106N. The received data is stored as network data 316 in database 318. In some examples, NMS 300 may be part of another server shown in FIG. 1A or a part of any other server.

Processor(s) 306 execute software instructions, such as those used to define a software or computer program, received from a computer-readable medium. Such instructions may be stored to a computer-readable storage medium (such as memory 312), such as non-transitory computer-readable media including a storage device (e.g., a disk drive, or an optical drive) or a memory (such as Flash memory or RAM) or any other type of volatile or non-volatile memory, that stores instructions to cause the one or more processors 306 to perform the techniques described herein. Such instructions may also or alternatively be received via a computer-readable transmission medium (such as via communication interface 330) that conveys instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client devices 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, and/or other network nodes within network 134, to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource manager (RRM) 360. SLE module 322 enables set up and tracking of thresholds for SLE metrics for each network of a network system (e.g., wireless network 106, wired network 175, SD-WAN 177). SLE module 322 analyzes SLE-related data observed and/or collected by devices of a network system (e.g., network system 100 in FIG. 1A), such as client devices 148, APs 142, switches 146, servers 110, 116, 122, 128 and/or any other network nodes, devices, or systems forming part of the network system. For example, an access point device (e.g., APs 142A-1 or AP device 200) may collect SLE-related data (e.g., network data 254 of FIG. 2) and is transmitted to NMS 300, which executes SLE module 322 to determine one or more SLE metrics indicative of a performance and/or status of the access point device. This data, in addition to any network and/or non-network data collected by other devices in the network system, is transmitted to NMS 300 and stored as, for example, network data 316 and non-network data 317 in database 318.

In some examples, SLE module 322 enables set up and tracking of thresholds for SLE metrics for an application session of the network system (e.g., application session 160 of FIGS. 1A and 1B). In these examples, SLE module 322 analyzes SLE-related data observed and/or collected by an application server and/or one or more devices of the application session. For example, NMS 300 may obtain application performance data from an application server (e.g., from an application service provider of the application of the application session) that includes data indicative of the performance of the application session based on modality, such as audio data, video data, and/or screen share data of an application session. For example, NMS 300 may obtain data indicative of the audio performance of each of the users participating in an application session, such as audio bitrate, codec, and/or other application parameters indicative of the audio performance of a sender and/or receiver of the application session. NMS 300 may additionally, or alternatively, obtain data indicative of the video performance of each of the users participating in the application session, such as video frame rate, video resolution, and/or other application parameters indicative of the video performance of a sender and/or receiver of the application session. NMS 300 may additionally, or alternatively, obtain data indicative of screen share performance of users participating in application session 160, such as video frame rate, video resolution, and/or other application parameters indicative of the screen share performance of a sender and/or receiver of application session 160. NMS 130 may store the application performance data in database 315 as application performance data 318.

NMS 300 may additionally obtain network data and/or non-network data of devices associated with application session 160. For example, NMS 300 may obtain data comprising event data, telemetry data, and/or other SLE-related data of one or more devices associated with an application session (e.g., application session 160 of FIG. 1A), such as access points, switches, user equipment, and/or other devices in a wireless, wired, and/or WAN network providing the contributing user with access to application session 160. NMS 130 may store the network data in database 315 as network data 316 and store non-network data in database 315 as non-network data 317.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine 360 may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of issues at one or more network devices of an application session (e.g., application session 160 of FIG. 1A). In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

In accordance with the disclosed techniques, VNA/AI engine 350 includes application issue identification engine 352 that may determine a root cause of an issue in performance of an application session including a plurality of users, and invoke one or more actions to remedy or prevent the issue.

In this example, application issue identification engine 352 includes an application user experience determination unit 354, a contributing user determination unit 356, and a root cause determination unit 358. Application user experience determination unit 354 may determine, based on application performance data 318 of an application session (e.g., application session 160 of FIG. 1A), a user experience application score that provides a qualitative measurement of user experience for a user of application session 160. For example, application user experience determination unit 354 may input application performance data 318 of application session 160 to a machine learning model (e.g., random forest-based model), ML model 380, which outputs a user experience application score of a sender or and/or receiver for application session 160. The user experience application score for the sender is referred to herein as "user experience application score-out" or "sender application score," and the user experience application score for the receiver is referred to herein as "user experience application score-in" or "receiver application score." As one example, the user experience application score-in is determined based on a weighted average of application performance data 318 associated with a receiver of application session 160, such as data sent to the application of application session 160 (e.g., audio in, video in, screen share in) and the user experience application score-out is determined based on a weighted average of application performance data 318 associated with a sender of application session 160, such as data sent out of the application of application session 160 (e.g., audio out, video out, screen share out). In some examples, application user experience determination unit 354 may associate a particular user experience application score and/or a particular range of user experience application scores with a particular level of user experience. For example, NMS 130 may associate a "bad" user experience for a user experience application score from 1-20, a "poor" user experience for a user experience application score from 21-60, a "fair" user experience for a user experience application score from 61-80, and a "good" user experience for a user experience application score from 81-100. The ranges described above are just an example of ranges associated with different levels of user experience, and the techniques disclosed herein are not limited to such examples, but may be any values or ranges associated with different levels of user experience.

As one example, application user experience determination unit 354 may determine, based on the user experience application score of a receiver, whether the receiver is experiencing a "bad" or "poor" user experience for a given instance (e.g., particular time or window of time) of application session 160. For example, application user experience determination unit 354 may compare the user experience application score for the receiver (e.g., user experience application score-in) to a threshold indicative of a "bad" or "poor" user experience (e.g., user experience application score-in < 61).

If the user experience application score for the receiver satisfies the threshold (e.g., user experience application score-in is less than 61), contributing user determination unit 356 may identify one or more users for the given instance of application session 160 that contributed to the receiver experiencing a "bad" or "poor" user experience. For example, contributing user determination unit 356 may, identify each sender that sent audio data, video data, and/or screen share data at the given instance the receiver is determined to have experienced a "bad" or "poor" user experience. For each sender, contributing user determination unit 356 may compare the user experience application score for the particular sender (e.g., user experience application score-out) to a threshold indicative of a "bad" or "poor" user experience (e.g., user experience application score-out < 61). If the user experience application score for a particular sender satisfies the threshold (e.g., user experience application score-out is less than 61), contributing user determination unit 356 may determine that the particular sender is a contributing user that contributed to the receiver experiencing the "bad" or "poor" user experience. Contributing user determination unit 356 may correlate the user experience application score for each of the contributing users with the user experience application score for the receiver that experienced the "bad" or "poor" user experience and may determine, in some examples, the particular contributing sender that contributed the most to the user experience of application session 160. For example, application user experience determination unit 354 may determine the particular contributing sender that had the lowest user experience application score-out, the particular contributing sender that had the most impact to the user experience of the application session (e.g., the sender that had the largest audio bitrate, video frame rate, etc.), or the like.

In some examples, NMS 130 may obtain network data 316 and non-network data 317 of devices of a network associated with the contributing user, such as access points, switches, user equipment, and/or other devices in a wireless, wired, and/or WAN network providing the contributing user with access to application session 160, and determine, based on the network data and/or non-network data of devices associated with the contributing user, a root cause of an issue of application session 160 with more granularity. For example, root cause determination unit 358 may determine, based on the network data 316 and/or non-network data 317 of devices associated with the contributing user, a service or function provided by a device associated with the contributing user, or a component of the device associated with the contributing user, is causing the issue in performance of application session 160.

As one example, root cause determination unit 358 may determine, based on network configuration and/or connectivity data of devices associated with application session 160, one or more devices of a network associated with the contributing user. For example, root cause determination unit 358 may determine a client device (e.g., client device 148A-1 of FIG. 1A) of the contributing user is wirelessly connected to an access point (e.g., AP 142A-1 of FIG. 1A) that is configured to provide the contributing user with access to application session 160. Root cause determination unit 358 may also determine that AP 142A-1 is connected to switch 146A, which is further connected to an edge routing device (e.g., router 187A of FIG. 1B). In this example, AP 142A-1 may detect a weak signal at the given instance the receiver of application session 160 had experienced a degradation in performance with application session 160 and may send data indicative of the weak signal event to NMS 300. Root cause determination unit 358 may determine, based on the weak signal event detected by AP 142A-1, that the root cause of the degradation in performance of application session 160 is caused by the weak signal of AP 142A-1.

As described above, application user experience determination unit 354 may input application performance data 318 of application session 160 to a machine learning model (e.g., random forest-based model), ML model 380, which outputs a user experience application score of a sender or and/or receiver for application session 160. In some examples, ML model 380 may comprise a supervised ML model that is trained, using training data comprising pre-collected, labeled network data received from network devices (e.g., client devices, APs, switches and/or other network nodes), to identify root causes of connectivity issues at one or more network device of the subset of network devices associated with a particular application session. The supervised ML model may comprise one of a logistical regression, naive Bayesian, support vector machine (SVM), decision trees and gradient boosting methods, neural networks, generative pretrained transformers (GPTs), or other types of learning models, or the like. In other examples, ML model 380 may comprise an unsupervised ML model. Although not shown in FIG. 3, in some examples, database 315 may store the training data and VNA/AI engine 350 or a dedicated training module may be configured to train ML model 380 based on the training data to determine appropriate weights across the one or more network features of the training data.

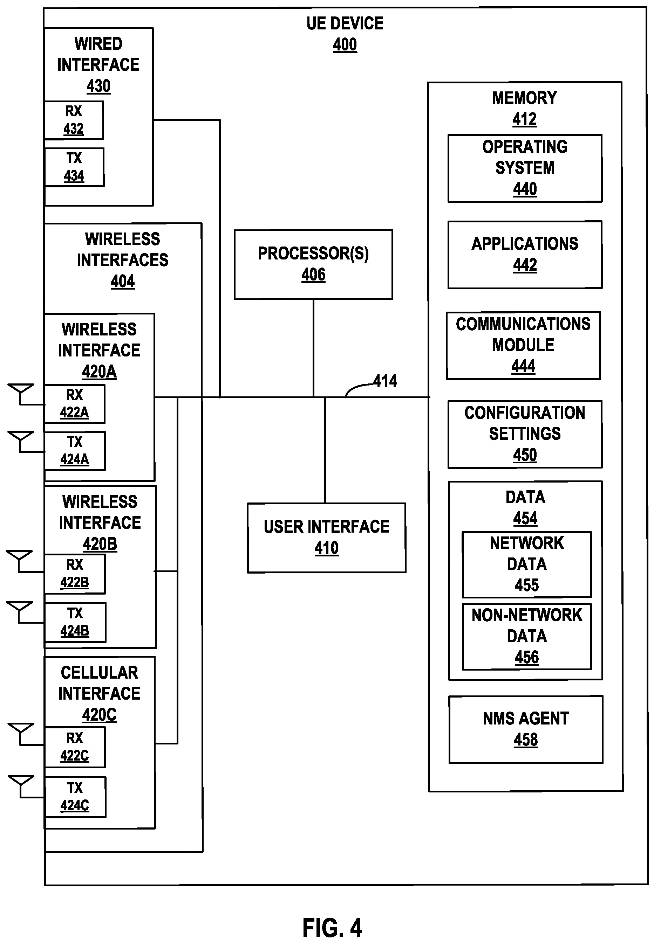

FIG. 4 is a block diagram illustrating an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In accordance with techniques described in this disclosure, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second, and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, received from a computer-readable medium. Such instructions may be stored to a computer-readable storage medium (such as memory 412), such as non-transitory computer-readable media including a storage device (e.g., a disk drive, or an optical drive) or a memory (such as Flash memory or RAM) or any other type of volatile or non-volatile memory, that stores instructions to cause the one or more processors 406 to perform the techniques described herein. Such instructions may also or alternatively be received via a computer-readable transmission medium (such as via wired interface 430 and/or wireless interface 420A, 420B or 420C) that conveys instructions to cause the one or more processors 406 to perform the techniques described herein.

Memory 412 includes one or more devices configured to store programming modules and/or data associated with operation of UE 400. For example, memory 412 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data 454. Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data 454 may include, for example, a status/error log including a list of events specific to UE 400. The events may include a log of both normal events and error events according to a logging level based on instructions from NMS 130. Data 454 may include any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130. In some examples, data 454 may store network data 455 and non-network data 456. Network data 455 may include data indicative of the performance and/or status of a network including AP device 200. For example, network data 455 may include SLE metrics or data used to compute SLE metrics indicative of wireless roaming performance used to determine network issues caused by slow roaming, roaming failure, sub-optimal roam, sticky client, etc.; client device performance used to determine network issues caused by CPU usage, battery usage, sub-optimal IP conduit span, etc. of UE 400; and/or other aspects of network performance. Non-network data 456 may include data indicative of the performance and/or status of UE 400. For example, non-network data 456 may include SLE metrics or data used to compute SLE metrics indicative of resource utilization (e.g., CPU utilization, memory utilization), quality of audio devices used (e.g., quality of headphones, microphone, speakers, etc.), and/or other aspects of the performance of UE 400. UE 400 may store data 454 and provide data 454 to NMS 130 to determine, based on data 454, a root cause of an issue in performance of an application session, such as determining a direction of the problem (e.g., determining whether the issue was caused by a sender or receiver), and/or determining a particular service or function provided by UE 400, or a component of UE 400, is causing the degradation in performance of the application session.

NMS agent 458 is a software agent of NMS 130 that is installed on UE 400. In some examples, NMS agent 458 can be implemented as a software application running on UE 400. NMS agent 458 collects information including detailed client-device properties from UE 400, including insight into UE 400 roaming behaviors. The information provides insight into client roaming algorithms, because roaming is a client device decision. In some examples, NMS agent 458 may display the client-device properties on UE 400. NMS agent 458 sends the client device properties to NMS 130, via an AP device to which UE 400 is connected. NMS agent 458 can be integrated into a custom application or as part of location application. NMS agent 458 may be configured to recognize device connection types (e.g., cellular or Wi-Fi), along with the corresponding signal strength. For example, NMS agent 458 recognizes access point connections and their corresponding signal strengths. NMS agent 458 can store information specifying the APs recognized by UE 400 as well as their corresponding signal strengths. NMS agent 458 or other element of UE 400 also collects information about which APs the UE 400 connected with, which also indicates which APs the UE 400 did not connect with. NMS agent 458 of UE 400 sends this information to NMS 130 via its connected AP. In this manner, UE 400 sends information about not only the AP that UE 400 is connected with, but also information about other APs that UE 400 recognized and did not connect with, and their signal strengths. The AP in turn forwards this information to NMS 130, including the information about other APs the UE 400 recognized besides itself. This additional level of granularity enables NMS 130, and ultimately network administrators, to better determine the Wi-Fi experience directly from the perspective of the client device.

In some examples, NMS agent 458 further enriches the client device data leveraged in service levels. For example, NMS agent 458 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 458. The more details the NMS agent 458 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 458 may cause user interface 410 to display a prompt that prompts an end user of UE 400 to enable location permissions before NMS agent 458 is able to report the location of the device, client information, and network connection data to NMS 130. NMS agent 458 will then start reporting connection data to NMS 130 along with location data. In this manner, the end user of the client device can control whether the NMS agent 458 is enabled to report client device information to NMS 130.

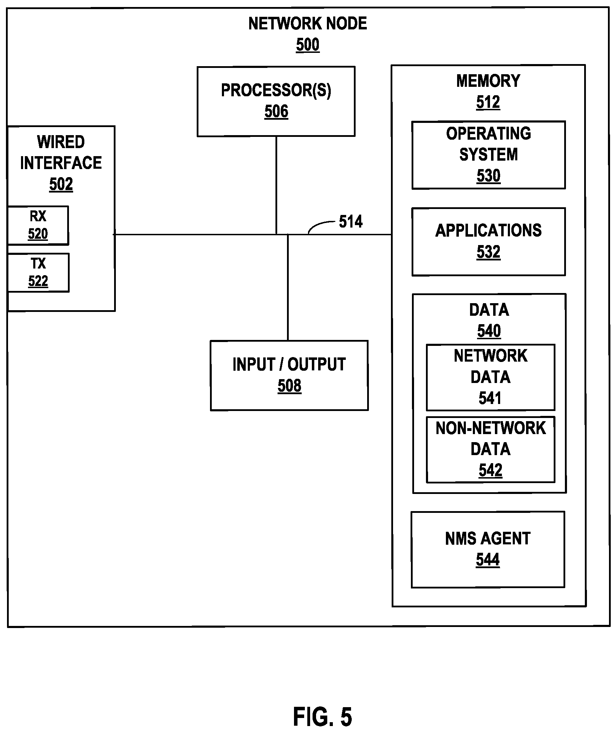

FIG. 5 is a block diagram illustrating an example network node 500, such as a router or switch, in accordance with one or more techniques described in this disclosure. In one or more examples, the network node 500 implements a device of wired LAN 175 (e.g., switch 146) or SD-WAN 177 (e.g., routers 187).

In this example, network node 500 includes a wired interface 502, e.g., an Ethernet interface, one or more processor(s) 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

In examples where network node 500 comprises a wired network device, network node 500 may be connected via wired interface 502 to one or more APs or other wired client-side devices, e.g., IoT devices, within a wired network edge. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502. Network node 500, operating as a wired network device, may collect data indicative of the performance and/or state of the wired network (e.g., wired network 175 of FIG. 1B), and report the data to NMS 130.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data indicative of the performance and/or state of the SD-WAN (e.g., SD-WAN 177 of FIG. 1B), such as data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data indicative of the performance and/or state of the SD-WAN (e.g., SD-WAN 177 of FIG. 1B) at a tunnel level, and the tunnel data may be retrieved by NMS 130 via an API or an open configuration protocol or the tunnel data may be reported to NMS 130 by NMS agent 544 or other module running on network node 500.

The data collected and reported by network node 500 may include periodically-reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer. In some examples, NMS agent 544 may periodically create a package of the statistical data according to a second periodic interval, e.g., every 3 minutes. The collected and sampled data periodically reported in the package of statistical data may be referred to herein as "oc-stats."

In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

Memory 512 stores executable software applications 532, operating system 530 and data 540. Data 540 may store event data, telemetry data, and/or other SLE-related data, such as oc-stats and/or oc-events, associated with an application session (e.g., application session 160 of FIG. 1A). In some examples, data 540 may include network data 541 and non-network data 542 observed and/or collected by network node 500. Network data 541 may include data indicative of the performance and/or status of a network including network node 500. For example, network data 541 may include SLE metrics or data used to compute SLE metrics indicative of wired network performance that may be indicative of network issues caused by network node 500 (e.g., switch to AP affinity, Power-over-Ethernet (PoE) compliance, VLANs, version compliance, switch uptime); client device performance that may be indicative of network issues caused by CPU usage, battery usage, sub-optimal IP conduit span, etc. of a client device connected to network node 500; SD-WAN performance that may be indicative of network issues caused by latency, jitter, packet loss, application disconnection, slow application, application bandwidth, etc.; and/or other aspects of network performance of the wired network and/or SD-WAN. Non-network data 542 may include data indicative of the performance and/or status of network node 500. For example, non-network data 542 may include SLE metrics or data used to compute SLE metrics indicative of resource utilization (e.g., CPU utilization, memory utilization) and/or other aspects of the performance of network node 500. Network node 500 may store data 540 and provide data 540 to NMS 130 to determine, based on data 500, a root cause of an issue in performance of an application session, such as determining a direction of the problem (e.g., determining whether the issue was caused by a sender or receiver), and/or determining a particular service or function provided by network node 500, or a component of network node 500, is causing the issue in performance of the application session.

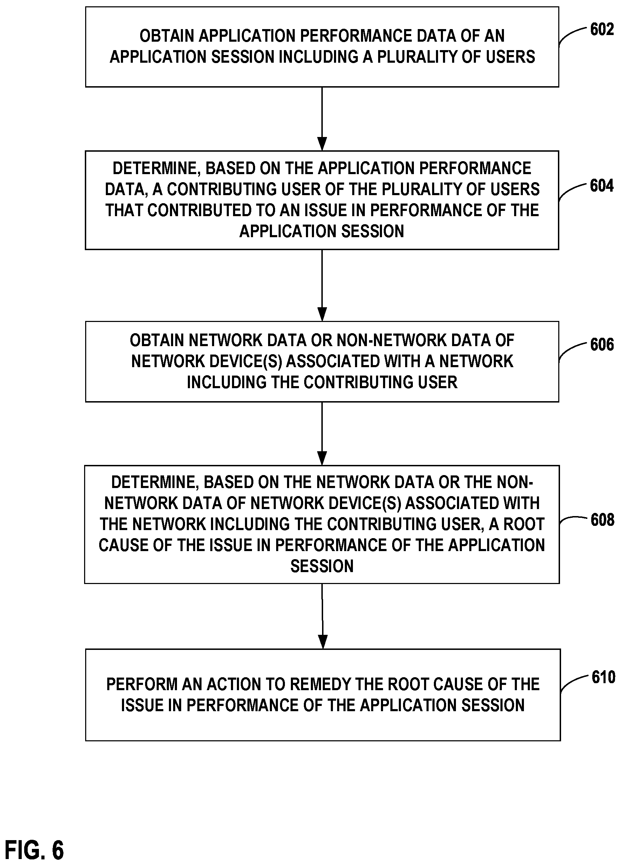

FIG. 6 is a flowchart illustrating an example operation of determining an issue of an application session including a plurality of users, in accordance with one or more techniques of the disclosure. The example operation of FIG. 6 is described with respect to application issue identification engine 136 of NMS 130 of FIGS. 1A-1B and application issue identification engine 352 of NMS 300 of FIG. 3.

NMS 130 obtains application performance data of an application session including a plurality of users (602). For example, NMS 130 may obtain application performance data 139 that includes data indicative of the performance of application session 160 based on modality, such as audio data, video data, and/or screenshare data of application session 160. For example, NMS 130 may obtain data indicative of the audio performance of each of the users participating in application session 160, such as audio bitrate, codec, and/or other application parameters indicative of the audio performance of a sender and/or receiver of application session 160. NMS 130 may additionally, or alternatively, obtain data indicative of the video performance of each of the users participating in application session 160, such as video frame rate, video resolution, and/or other application parameters indicative of the video performance of a sender and/or receiver of application session 160. NMS 130 may additionally, or alternatively, obtain data indicative of screenshare performance of users participating in application session 160, such as video frame rate, video resolution, and/or other application parameters indicative of the screenshare performance of a sender and/or receiver of application session 160.

NMS 130 determines, based on the application performance data, a contributing user of the plurality of users that contributed to an issue in performance of the application session (604). For example, NMS 130 may determine, based on application performance data 139 of application session 160, a user experience application score that provides a qualitative measurement of user experience for a user of application session 160. For example, NMS 130 may determine, for a given instance of application session 160, a user experience application score for a sender (e.g., "user experience application score-out" or "sender application score") and a user experience application score for a receiver (e.g., "user experience application score-in" or "receiver application score"). As one example, the user experience application score-in is determined based on a weighted average of application performance data 139 associated with a receiver of application session 160, such as data sent to the application of application session 160 (e.g., audio in, video in, screenshare in) and the user experience application score-out is determined based on a weighted average of application performance data 318 associated with a sender of application session 160, such as data sent out of the application of application session 160 (e.g., audio out, video out, screenshare out).

In some examples, NMS 130 may associate a particular user experience application score and/or a particular range of user experience application scores with a particular level of user experience (e.g., levels corresponding to "bad," "poor," "fair," and/or "good" user experience). NMS 130 may determine, based on the user experience application score of a user, whether the user is experiencing a "bad" or "poor" user experience for a given instance (e.g., particular time or window of time) of application session 160. If the user experience application score for the user satisfies the threshold (e.g., user experience application score-in is less than 61), contributing user determination unit 356 may identify one or more contributing senders for the given instance of application session 160 that the receiver experienced a "bad" or "poor" user experience. For example, contributing user determination unit 356 may, identify each contributing sender that sent audio data, video data, and/or screen share data at the given instance the receiver is determined to have experienced a "bad" or "poor" user experience. For each contributing sender, contributing user determination unit 356 may compare the user experience application score for the particular contributing sender (e.g., user experience application score-out) to a threshold indicative of a "bad" or "poor" user experience (e.g., user experience application score-out < 61). If the user experience application score for a particular contributing sender satisfies the threshold (e.g., user experience application score-out is less than 61), contributing user determination unit 356 may co-relate the user experience application score for each of the contributing senders with the user experience application score for the receiver that experienced the "bad" or "poor" user experience and may determine, in some examples, the particular contributing sender that contributed the most to the user experience of application session 160. For example, application user experience determination unit 354 may determine the particular contributing sender that had the lowest user experience application score-out, the particular contributing sender that had the most impact to the user experience of the application session (e.g., the sender that had the largest audio bitrate, video frame rate, etc.), or the like.

In some examples, NMS 130 may obtain network data or non-network data of devices of a network associated with the contributing user (606). For example, NMS 130 may obtain network data and/or non-network data of access points, switches, user equipment, and/or other devices in a wireless, wired, and/or WAN network providing the contributing user with access to application session 160. NMS 130 may determine, based on the network data and/or non-network data of devices of the network associated with the contributing user, a root cause of the issue in performance of application session 160 (608). For example, NMS 130 observes, collects, and/or receives network data 137 and/or non-network data 138 of devices associated with the contributing user, which may take the form of data extracted from messages, counters, and statistics, for example. Network data 137 may include SLE metrics or data used to compute SLE metrics indicative of wireless capacity performance, wireless coverage performance, wireless roaming performance, wired network performance, SD-WAN performance, client device performance, partner link performance (e.g., performance of coparticipant of an application session, etc.), and/or other aspects of network performance provided by the devices of the network associated with the contributing user. Non-network data 138 may include SLE metrics or data to compute SLE metrics indicative of resource utilization (e.g., CPU utilization, memory utilization), quality of audio devices used (e.g., quality of headphones, microphone, speakers, etc.) or other aspects of device performance of devices of the network associated with the contributing user. NMS 130 may determine, based on the network data and/or non-network data of the devices of the network associated with the contributing user, that a particular service or function (e.g., wireless, wired, WAN services or functions) provided by the device of the network associated with a contributing user, or a component of a device (e.g., CPU, battery, etc.), is the root cause of the issue in performance of application session 160.

NMS 130 performs an action to remedy the root cause of the issue in performance of the application session (610). For example, NMS 130 may generate a notification specifying the root cause of the degradation in performance of application session 160 or automatically performing a remedial action to devices associated with application session 160 (e.g., resetting one or more network devices, changing the configuration of one or more network devices, etc.). In some examples in which network devices associated with application session 160 are provided by third-parties (and data cannot be obtained from the network devices), NMS 130 may output a notification including an address (e.g., IP address) of the sender device contributing (or whose network associated with the sender device is contributing) to the degradation in performance of application session 160 and/or an indication of the service provider of the sender.

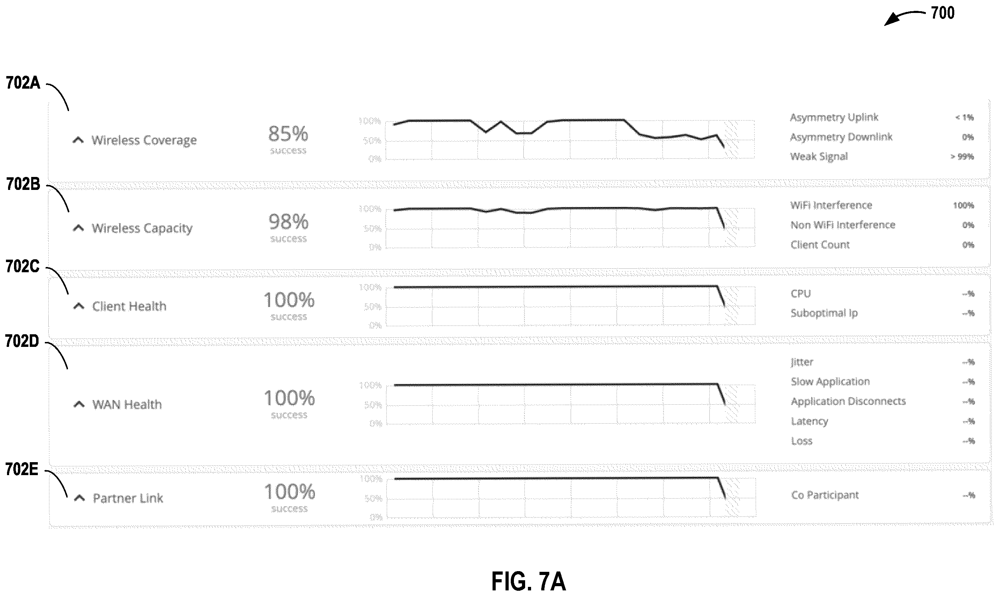

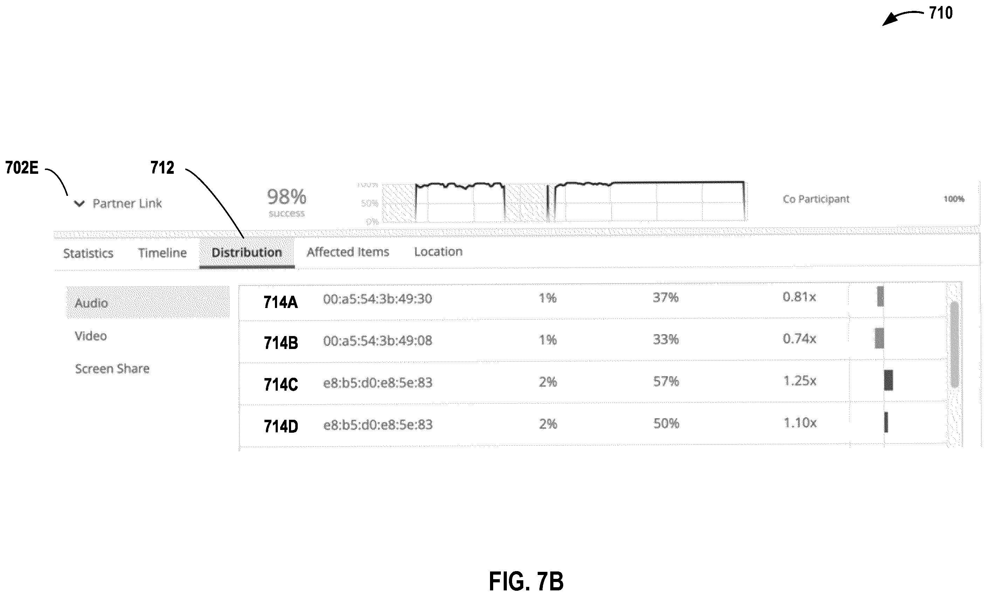

FIGS. 7A and 7B illustrate example user interfaces including user interface elements representing data indicative of a root cause of an issue in performance of an application session, in accordance with one or more techniques of the disclosure. In some examples, NMS 130 may generate data representative of a user interface (UI), e.g., UI 700 of FIG. 7A and UI 710 of FIG. 7B, comprising UI elements representing data indicative of one or more SLE metrics that may indicate different causes of an issue in performance of an application session.

In the example of FIG. 7A, UI 700 may include UI elements 702A-702E. UI element 702A may represent an SLE metric indicative of the coverage by a device (e.g., AP device 142A-1 of FIG. 1A) for one or more client devices ("wireless coverage") used to determine network issues caused by a asymmetric uplink, a asymmetric downlink, a weak signal, etc. UI element 702B may represent an SLE metric indicative of communication channel capacity (bandwidth) of AP device 200 available to clients ("wireless capacity") used to determine network issues caused by Wi-Fi interference, non-Wi-Fi interference, client device count, client device usage, etc. UI element 702C may represent an SLE metric indicative of client device performance used to determine network issues caused by CPU usage, battery usage, sub-optimal IP conduit span, etc. of a client device. UI element 702D may represent an SLE metric indicative of SD-WAN performance used to determine network issues caused by latency, jitter, packet loss, application disconnection, slow application, application bandwidth, etc. UI element 702E may represent an SLE metric indicative of partner link performance used to determine network issues caused by a coparticipant of an application session.

In the example of FIG. 7B, UI 710 may include UI element 712 that may represent the data distribution of the application session, such as audio data, video data, and/or screen share data of each user of the application session. In this example, UI element 712 may represent the audio data of users 714A-714D. In some examples, UI element 712 may further represent a user experience application score for each of users 714A-714D based on modality.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. For example, the computer-readable medium may be provided as a computer-readable data storage medium that may store such instructions for execution by a processor. The computer-readable medium may also or alternatively be provided as a computer-readable data transmission medium that may convey such instructions for execution by a processor

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for a network management system (NMS) configured to determine a root cause of an issue in performance of an application session, and perform one or more actions to remedy the issue. For example, the NMS is configured to obtain application performance data of an application session including a plurality of users; determine, based on the application performance data, a contributing user that contributed to an issue in performance of the application session; obtain network data or non-network data of one or more devices of a network associated with the contributing user; determine, based on the network data or non-network data of the one or more devices of the network associated with the contributing user, a root cause of the issue in performance of the application session; and perform an action to remedy the root cause of the issue in performance of the application session.

Further examples of feature combinations taught by the present disclosure are set out in the following numbered clauses.

Clause 1. A network management system comprising: memory; and one or more processors coupled to the memory and configured to: obtain application performance data of an application session including a plurality of users; determine, based on the application performance data, a contributing user of the plurality of users that contributed to an issue in performance of the application session; obtain network data or non-network data of one or more devices of a network associated with the contributing user; determine, based on the network data or non-network data of the one or more devices of the network associated with the contributing user, a root cause of the issue in performance of the application session; and perform an action to remedy the root cause of the issue in performance of the application session.

Clause 2. The network management system of clause 1, wherein to determine the root cause of the issue, the one or more processors are configured to: determine that a sender of the plurality of users that sends data to one or more receivers of the plurality of users is the root cause of the issue in performance of the application session.

Clause 3. The network management system of clause 1 or 2, wherein to determine the root cause of the issue, the one or more processors are configured to: determine that a receiver of the plurality of users that receives data from a sender of the plurality of users is the root cause of the issue in performance of the application session.

Clause 4. The network management system of clause 1, 2 or 3, wherein to determine the root cause of the issue, the one or more processors are configured to: determine that the root cause of the issue in performance of the application session is caused by a network service or function provided by at least one device of the one or more devices of the network associated with the contributing user.

Clause 5. The network management system of any preceding clause, wherein to determine the root cause of the issue, the one or more processors are configured to: determine that the root cause of the issue in performance of the application session is caused by a component of at least one device of the one or more devices of the network associated with the contributing user.

Clause 6. The network management system of any preceding clause, wherein to determine the contributing user that contributed to the issue in performance of the application session, the one or more processors are configured to: determine, for a given instance of the application session, a first user experience application score for a first user of the plurality of users; based on determining the first user experience application score for the user satisfies a threshold, determine a second user experience application score for a second user for the given instance of the application session; based on determining that the second user experience application score for the second user satisfies the threshold, determining that the second user is the contributing user; and based on determining that the second user is the contributing user, correlate application performance data associated with the first user with application performance data associated with the second user.

Clause 7. The network management system of clause 6, wherein to determine the first user experience application score for the user, the one or more processors are configured to: determine the first user experience application score for the user based on a weighted average of audio data, video data, and screen share data.

Clause 8. The network management system of any preceding clause, wherein the application performance data comprises one or more of: latency of audio data; jitter of audio data; packet loss of audio data; audio bitrate; latency of video data; jitter of video data; latency of screen share data; jitter of screen share data; video frame rate; or video resolution.

Clause 9. The network management system of any preceding clause, wherein to determine the root cause of the issue, the one or more processors are configured to determine at least one of: n asymmetric uplink of a wireless network; an asymmetric downlink of the wireless network; a weak signal of the wireless network; Wi-Fi interference of the wireless network; non-Wi-Fi interference of the wireless network; client device count of the wireless network; slow roaming of the wireless network; roaming failure of the wireless network; sub-optimal roam of the wireless network; sticky client of the wireless network; switch bandwidth of a wired network; latency of a Wide Area Network (WAN); jitter of the WAN; packet loss of the WAN; application disconnection of the WAN; slow application of the WAN; application bandwidth of the WAN; computer processing unit usage; memory usage; battery usage; or quality of an audio device communicatively coupled to the one or more devices.

Clause 10. A method comprising: obtaining, by a computing system, application performance data of an application session including a plurality of users; determining, by the computing system and based on the application performance data, a contributing user of the plurality of users that contributed to an issue in performance of the application session; obtaining, by the computing system, network data or non-network data of one or more devices of a network associated with the contributing user; determining, by the computing system and based on the network data or non-network data of the one or more devices of the network associated with the contributing user, a root cause of the issue in performance of the application session; and performing, by the computing system, an action to remedy the root cause of the issue in performance of the application session.

Clause 11. The method of clause 10, wherein determining the root cause of the issue comprises: determining that a sender of the plurality of users that sends data to one or more receivers of the plurality of users is the root cause of the issue in performance of the application session.

Clause 12. The method of clause 10 or 11, wherein determining the root cause of the issue comprises: determining that a receiver of the plurality of users that receives data from a sender of the plurality of users is the root cause of the issue in performance of the application session.

Clause 13. The method of clause 10, 11 or 12, wherein determining the root cause of the issue comprises: determine that the root cause of the issue in performance of the application session is caused by a network service or function provided by at least one device of the one or more devices of the network associated with the contributing user.

Clause 14. The method of any of clauses 10 to 13, wherein determining the root cause of the issue comprises: determining that the root cause of the issue in performance of the application session is caused by a component of at least one device of the one or more devices of the network associated with the contributing user.

Clause 15. The method of any of clauses 10 to 14, wherein determining the contributing user that contributed to the issue in performance of the application session comprises: determining, for a given instance of the application session, a first user experience application score for a first user of the plurality of users; based on determining the first user experience application score for the first user satisfies the threshold, determining a second user experience application score for a second user for the given instance of the application session; based on determining that the second user experience application score for the second user satisfies the threshold, determining that the second user is the contributing user; and based on determining that the second user is the contributing user, correlate application performance data associated with the first user with application performance data associated with the second user.

Clause 16. The method of clause 15, wherein determining the user experience application score for the user comprises: determining the user experience application score for the user based on a weighted average of audio data, video data, and screen share data.

Clause 17. The method of any of clauses 1o to 16, wherein the application performance data comprises one or more of: latency of audio data; jitter of audio data; packet loss of audio data; audio bitrate; latency of video data; jitter of video data; latency of screen share data; jitter of screen share data; video frame rate; or video resolution.

Clause 18. The method of any of clauses 10 to 17, wherein determining the root cause of the issue comprises determining at least one of: an asymmetric uplink of a wireless network; an asymmetric downlink of the wireless network; a weak signal of the wireless network; Wi-Fi interference of the wireless network; non-Wi-Fi interference of the wireless network; client device count of the wireless network; slow roaming of the wireless network; roaming failure of the wireless network; sub-optimal roam of the wireless network; sticky client of the wireless network; switch bandwidth of a wired network; latency of a Wide Area Network (WAN); jitter of the WAN; packet loss of the WAN; application disconnection of the WAN; slow application of the WAN; application bandwidth of the WAN; computer processing unit usage; memory usage; battery usage; or quality of an audio device communicatively coupled to the one or more devices.

Clause 19. Computer-readable media comprising instructions that, when executed by processing circuitry, cause the processing circuitry to: obtain application performance data of an application session including a plurality of users; determine, based on the application performance data, a contributing user of the plurality of users that contributed to an issue in performance of the application session; obtain network data or non-network data of one or more devices associated with a network including the contributing user; determine, based on the network data or non-network data of the one or more devices associated with the network including the contributing user, a root cause of the issue in performance of the application session; and perform an action to remedy the root cause of the issue in performance of the application session.

Clause 20. The computer-readable media of clause 19, wherein to determine the contributing user that contributed to the issue in performance of the application session, the instructions further cause the processing circuitry to: determine, for a given instance of the application session, a first user experience application score for a first user of the plurality of users; based on determining the first user experience application score for the user satisfies a threshold, determine a second user experience application score for a second user for the given instance of the application session; based on determining that the second user experience application score for the second user satisfies the threshold, determining that the second user is the contributing user; and based on determining that the second user is the contributing user, correlate application performance data associated with the first user with application performance data associated with the second user.

## Claims

1. A network management system comprising:
memory; and
one or more processors coupled to the memory and configured to:
obtain application performance data of an application session including a plurality of users;
determine, based on the application performance data, a contributing user of the plurality of users that contributed to an issue in performance of the application session;
obtain network data or non-network data of one or more devices of a network associated with the contributing user;
determine, based on the network data or non-network data of the one or more devices of the network associated with the contributing user, a root cause of the issue in performance of the application session; and
perform an action to remedy the root cause of the issue in performance of the application session.

2. The network management system of claim 1, wherein to determine the root cause of the issue, the one or more processors are configured to:
determine that a sender of the plurality of users that sends data to one or more receivers of the plurality of users is the root cause of the issue in performance of the application session.

3. The network management system of claim 1, wherein to determine the root cause of the issue, the one or more processors are configured to:
determine that a receiver of the plurality of users that receives data from a sender of the plurality of users is the root cause of the issue in performance of the application session.

4. The network management system of claim 1, wherein to determine the root cause of the issue, the one or more processors are configured to:
determine that the root cause of the issue in performance of the application session is caused by a network service or function provided by at least one device of the one or more devices of the network associated with the contributing user.

5. The network management system of claim 1, wherein to determine the root cause of the issue, the one or more processors are configured to:
determine that the root cause of the issue in performance of the application session is caused by a component of at least one device of the one or more devices of the network associated with the contributing user.

6. The network management system of any of claims 1-5, wherein to determine the contributing user that contributed to the issue in performance of the application session, the one or more processors are configured to:
determine, for a given instance of the application session, a first user experience application score for a first user of the plurality of users;
based on determining the first user experience application score for the user satisfies a threshold, determine a second user experience application score for a second user for the given instance of the application session;
based on determining that the second user experience application score for the second user satisfies the threshold, determining that the second user is the contributing user; and
based on determining that the second user is the contributing user, correlate application performance data associated with the first user with application performance data associated with the second user.

7. The network management system of claim 6, wherein to determine the first user experience application score for the user, the one or more processors are configured to:
determine the first user experience application score for the user based on a weighted average of audio data, video data, and screen share data.

8. The network management system of any of claims 1-7, wherein the application performance data comprises one or more of:
latency of audio data;
jitter of audio data;
packet loss of audio data;
audio bitrate;
latency of video data;
jitter of video data;
latency of screen share data;
jitter of screen share data;
video frame rate; or
video resolution.

9. The network management system of any of claims 1-8, wherein to determine the root cause of the issue, the one or more processors are configured to determine at least one of:
an asymmetric uplink of a wireless network;
an asymmetric downlink of the wireless network;
a weak signal of the wireless network;
Wi-Fi interference of the wireless network;
non-Wi-Fi interference of the wireless network;
client device count of the wireless network;
slow roaming of the wireless network;
roaming failure of the wireless network;
sub-optimal roam of the wireless network;
sticky client of the wireless network;
switch bandwidth of a wired network;
latency of a Wide Area Network, WAN;
jitter of the WAN;
packet loss of the WAN;
application disconnection of the WAN;
slow application of the WAN;
application bandwidth of the WAN;
computer processing unit usage;
memory usage;
battery usage; or
quality of an audio device communicatively coupled to the one or more devices.

10. A method comprising:
obtaining, by a computing system, application performance data of an application session including a plurality of users;
determining, by the computing system and based on the application performance data, a contributing user of the plurality of users that contributed to an issue in performance of the application session;
obtaining, by the computing system, network data or non-network data of one or more devices of a network associated with the contributing user;
determining, by the computing system and based on the network data or non-network data of the one or more devices of the network associated with the contributing user, a root cause of the issue in performance of the application session; and
performing, by the computing system, an action to remedy the root cause of the issue in performance of the application session.

11. The method of claim 10, further comprising steps corresponding to the functionality recited in any of claims 2-9.

12. A computer-readable storage medium encoded with instructions for causing one or more programmable processors to become configured to perform the method recited by any of claims 10-11.
